**Europäisches Patentamt**

**European Patent Office**

**Office européen des brevets**

(19)

(11) Veröffentlichungsnummer : **0 091 536**
**B1**

(12) **EUROPÄISCHE PATENTSCHRIFT**

(45) Veröffentlichungstag der Patentschrift :
12.11.86

(51) Int. Cl.⁴ : **B 29 C 33/00**

(21) Anmeldenummer : **82890101.7**

(22) Anmeldetag : **08.07.82**

(54) Schuh und Spritzform zur Herstellung der Sohle desselben.

(30) Priorität : 14.04.82 AT 1452/82

(43) Veröffentlichungstag der Anmeldung :
19.10.83 Patentblatt 83/42

(45) Bekanntmachung des Hinweises auf die Patenterteilung : 12.11.86 Patentblatt 86/46

(84) Benannte Vertragsstaaten :
BE CH DE FR GB IT LI LU NL SE

(56) Entgegenhaltungen :
DE-A- 2 121 460
DE-A- 2 901 486
DE-B- 1 270 793
GB-A- 1 584 691

(73) Patentinhaber : Schuhfabrik Strakosch Ges.m.b.H
Lastenstrasse 11
A-8020 Graz (AT)

(72) Erfinder : Almer, Ronald
Gnaserstrasse 6
A-8330 Feldbach (AT)

(74) Vertreter : Holzer, Walter, Dipl.-Ing. et al
Patentanwälte Dipl.-Ing. Dr.techn. Schütz Alfred Dipl.-
Ing. Dr.techn. Pfeifer Rudolf Dr.phil. Mrazek Engelbert
Dipl.-Ing. Holzer Walter Dipl.-Ing. Pfeifer Otto
Fleischmanngasse 9 A-1040 Wien (AT)

EP 0 091 536 B1

## Beschreibung

Die Erfindung bezieht sich auf einen Schuh mit einem Schaft, einer mit dem unteren Schaftrand verbundenen Brandsohle sowie einer mit dieser verbundenen Laufsohle, wobei sich an der Schaftaußenseite von der Laufsohle ein Streifen nach oben erstreckt, der einen gesonderten umlaufenden Wulst bildet, welcher mit dem Laufsohlenprofil eine im wesentlichen spitzwinkelige Einkerbung begrenzt. Derartige Schuhe, die insbesondere als Freizeitschuhe verwendet werden, werden auch als « California »-Schuhe bezeichnet.

Bei der Herstellung von Schuhen dieser Machart wird üblicherweise so vorgegangen, daß der untere Schaftrand mit der Brandsohle sowie mit dem oberen Rand eines gesonderten, gegen den Schaft hochgeschlagenen Wulststreifens vernäht und der Schuhoberteil auf einem Leisten angeordnet wird. Der Wulststreifen wird sodann aufgerauht und mit Klebstoff eingestrichen. Danach wird eine relativ steife Zwischensohle, die als gesonderter Formteil aus Kunststoff hergestellt ist, ebenfalls aufgerauht, mit Klebstoff eingestrichen und mit der Brandsohle sowie mit dem nach unten um die Zwischensohle umgeschlagenen Wulststreifen unter Druck verklebt. Die abgenähten Ränder von Schaft, Brandsohle und Wulststreifen werden dabei von einer Umfangsrille der Zwischensohle aufgenommen. Schließlich wird auf den umgeschlagenen Rand des Wulststreifens und auf die Zwischensohle nach Aufrauhen derselben eine ebenfalls als gesonderter Teil vorgefertigte Laufsohle aufgeklebt.

Diese Schuhausbildung hat vor allem herstellungstechnisch den Nachteil, daß sie eine große Anzahl von Arbeitsschritten erfordert, die mit großer Genauigkeit von Hand ausgeführt werden müssen und hohe Kosten verursachen ; insbesondere müssen in zwei Arbeitsvorgängen jeweils der Wulststreifen und die Zwischensohle aufgerauht, mit Klebstoff eingestrichen und sowohl miteinander als auch mit den zugeordneten Sohlen unter Druck verbunden werden. Der bekannte Schuh ist außerdem materialaufwendig, weil eine steife Zwischensohle Verwendung findet, die gesondert hergestellt und mit einer speziellen Umfangsrille zur Aufnahme des Nahtüberstandes versehen werden muß. Ein weiterer Nachteil der bekannten Schuhausführung besteht darin, daß infolge des Verklebens der Laufsohle mit der Zwischensohle und mit dem Wulststreifen im Gebrauch die Gefahr eines Ablösens der Laufsohle besteht, wodurch die Lebensdauer des Schuhs herabgesetzt wird.

Die Erfindung zielt nun darauf ab, einen Schuh der geschilderten « California »-Machart zu schaffen, der im Aufbau und in der Herstellung wesentlich einfacher und kostengünstiger ist als der bekannte Schuh.

Der erfindungsgemäße Schuh zeichnet sich dadurch aus, daß der Wulststreifen mit Abstand vom unteren Schaftrand an den Schaft angesetzt und mit diesem verbunden ist, und daß der zumindest teilweise oberhalb der Brandsohle gelegene Hohlraum zwischen Wulststreifen und Schaft von dem an die Brandsohle in an sich bekannter Weise in einem Spritzvorgang angeformtem Laufsohlenmaterial, vorzugsweise thermoplastischem Material, ausgefüllt ist, wobei der sich von der Spitze der Einkerbung schräg nach innen erstreckende freie Rand des Wulststreifens, wie ebenfalls an sich bekannt, vom Laufsohlenmaterial umgeben ist.

Durch diese Ausbildung wird erreicht, daß der Schuh aus einer geringeren Anzahl von Teilen besteht als der bekannte und auf einfachere Weise als dieser hergestellt werden kann. Zunächst wird eine material- und kostenaufwendige Zwischensohle zur Aufnahme der den Schaft mit dem Wulststreifen und mit der Brandsohle verbindenden Naht vermieden. Ferner entfallen die zeit- und kostenintensiven Handarbeitsvorgänge zum Aufrauhen und Verkleben der einzelnen Teile. Insgesamt kann die Herstellungszeit des Schuhs wesentlich verkürzt werden, wobei in der Praxis der gesamte Herstellungsvorgang in der bisher für die Herstellung der Zwischensohle des bekannten Schuhes erforderlichen Zeitspanne durchgeführt werden kann. Der erfindungsgemäße Schuh hat ferner den Vorteil einer langen Lebensdauer, weil die Gefahr eines Ablösens der Laufsohle nicht besteht.

Die Bindung zwischen der angeformten Laufsohle und dem Wulststreifen kann ferner dadurch verbessert werden, daß ein Wulststreifen aus Kunststoff verwendet wird.

Die erfindungsgemäße Ausbildung ermöglicht es außerdem auf einfache Weise, durch eine entsprechende Leistenausbildung beim Anformen der Laufsohle im Schuhinneren ein Fußbett auszubilden.

Es sei erwähnt, daß es beispielsweise aus der DE-A-2 121 460 bereits bekannt ist, Laufsohlen aus Kunststoff in einem Spritzvorgang zu formen, doch konnte diese Technik bisher nicht zur Herstellung von Schuhen der sogenannten « California »-Machart angewendet werden. Im bekannten Fall wird lediglich ein Sohlenrandstreifen mit der Außensohle verbunden. Der Randstreifen ist mit dem unteren Schaftrand durch eine Zugkordel verbunden, welche das Anhaften der plastischen Sohlenmasse begünstigt und das Abdichten des Formhohlraumes erleichtert. Der freie Rand des Streifens wird in das Laufsohlenmaterial eingebettet.

Gegenstand der Erfindung ist ferner eine zur Herstellung des geschilderten Schuhs bestimmte Spritzform mit einem Leisten, zwei gegeneinander bewegbaren Seitenteilen zum Ausformen der Laufsohlenseiten, wobei das Formungsprofil jedes Seitenteiles eine Dichtkante aufweist, und einem relativ zu den Seitenteilen bewegbaren, zum Ausformen der Laufsohlenunterseite dienenden Stempel, in dem Kanäle zum Einspritzen des Laufsohlenmaterials in den Formhohlraum ausgebildet sind ; diese Form hat erfindungsgemäß die Merkmale, daß das Formungsprofil jedes Seitenteiles einen sich von der Dichtkante schräg nach oben und außen über die Unterseite des Leistens hinaus erstreckenden Formungsprofilabschnitt als Anlagefläche für den Wulststreifen beim Einspritzen des Laufsohlenmaterials aufweist, und daß der Leisten bei geschlossener Form oberhalb der Seitenteildichtkante angeordnet ist und von dieser auch einen seitlichen Abstand hat, der größer als die Stärke des auf den Leisten aufzubringenden Schuhschaftes ist.

Infolge dieser Formausbildung erfolgt die Abdichtung des Formhohlraumes nach oben nicht wie bisher gegen den Leisten bzw. gegen die Leistenunterkante, sondern gegen den Wulststreifen, der durch das von unten eingespritzte, an seiner Innenseite hochsteigende Laufsohlenmaterial gegen die Dichtkante und gegen den zugeordneten Profilabschnitt der Seitenteile gedrückt wird.

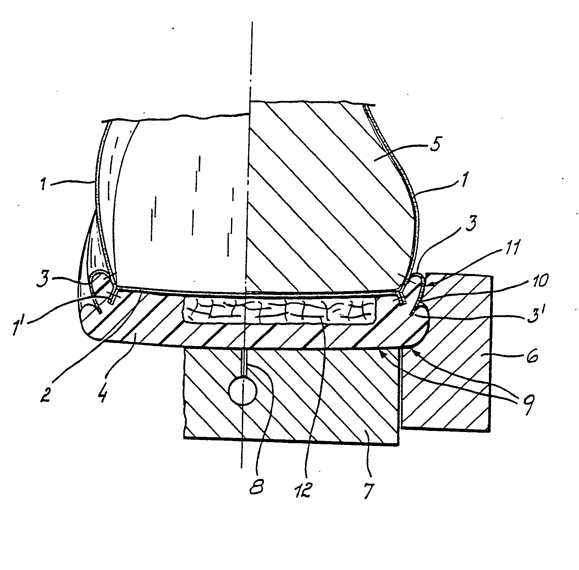

Die Erfindung und weitere Vorteile derselben werden nachfolgend an einem Ausführungsbeispiel unter Bezugnahme auf die Zeichnung näher erläutert, in welcher die linke Hälfte einen Querschnitt durch einen Schuh und die rechte Hälfte einen Querschnitt durch eine geschlossene Spritzform mit dem in dieser angeordneten Schuh nach dem Anspritzen der Laufsohle zeigt.

Der dargestellte Schuh, insbesondere Halbschuh, hat einen z. B. aus Leder bestehenden Oberteil mit einem Schaft 1, eine mit dem unteren Schaftrand 1' vernähte Brandsohle 2, einen mit Abstand vom unteren Schaftrand 1' an den Schaft angesetzten und angenähten Wulststreifen 3 und eine durch Spritzen angeformte Laufsohle 4 aus Kunststoff, vorzugsweise aus einem thermoplastischen Kunststoff, wie PVC. Wie die Zeichnung zeigt, füllt das Laufsohlenmaterial den Hohlraum zwischen dem Wulststreifen 3 und dem Schaft 1 unter Bildung eines gesonderten umlaufenden Wulstes zur Gänze aus und endet an der Außenseite des Wulststreifens 3 mit etwas Abstand vom freien Rand 3' desselben. Wie die Zeichnung zeigt, begrenzt der gebildete Wulst mit dem Laufsohlenprofil eine im wesentlichen spitzwinkelige Einkerbung. Der freie Rand 3' des Wulststreifens erstreckt sich von der Spritze der Einkerbung schräg nach innen und ist somit im Sohlenmaterial eingebettet. Der Wulststreifen 3 kann ebenfalls aus Leder bestehen, doch wird vorzugsweise ein Wulststreifen aus Kunststoff verwendet, weil dadurch die Bindung mit dem Laufsohlenmaterial verbessert wird.

Die zur Herstellung des Schuhs verwendete Form hat einen Leisten 5, zwei die Seiten der Laufsohle ausformende, gegeneinander bewegbare Formseitenteile 6, deren Trennebene in der Längsmittelebene des Schuhs liegt, sowie einen das Laufsohlenmuster ausformenden Stempel 7, der zwischen die Seitenteile 6 einfahrbar ist. Der Stempel 7 enthält mehrere Kanäle 8 zum Einspritzen des Sohlenmaterials.

Die Seitenteile 6 der Form bilden mit dem Stempel 7 einen die Sichtfläche der Laufsohle ausformenden Formhohlraum 9, der durch eine umlaufende, nach innen vorspringende Dichtkante 10 des Formungsprofils der Seitenteile 6 nach oben begrenzt ist. Von der Dichtkante 10 erstreckt sich ein zurückspringender Formungsprofilabschnitt 11 schräg nach oben und außen und über die Unterseite des Leistens bei geschlossener Form hinaus. An den Formungsprofilabschnitt 11 legt sich beim Formungsvorgang der Wulststreifen 3 an, wie dies nachstehend erläutert wird.

Wie die Zeichnung zeigt, liegt bei geschlossener Form die Unterseite des Leistens 5 mit Abstand oberhalb der Dichtkante 10. Der Leisten 5 hat außerdem einen vorbestimmten seitlichen Abstand von der Dichtkante 10, der größer als die Stärke des auf den Leisten aufzubringenden Schaftes ist, so daß das Laufsohlenmaterial beim Einspritzen über die Kanäle 8 zwischen dem an der Dichtkante 10 anliegenden, über diese etwas überstehenden Wulststreifen 3 und dem Schaft 1 hochsteigt. Der Wulststreifen 3 wird dadurch gegen den Formungsprofilabschnitt 11 gedrückt und der Raum zwischen Schaft und Wulststreifen vom Laufsohlenmaterial unter Bildung eines Wulstes vorbestimmter Stärke zur Gänze ausgefüllt.

Die Erfindung ist nicht auf das dargestellte Ausführungsbeispiel beschränkt, dieses kann vielmehr im Rahmen des allgemeinen Erfindungsgedankens verschiedentlich abgewandelt werden. So braucht sich beispielsweise der Profilabschnitt 11 nicht über die gesamte Höhe des Wulststreifens zu erstrecken. Ferner kann an der Unterseite der Brandsohle 2 eine kleiner als diese ausgebildete zusätzliche Filzeinlage 12 angeordnet und in das Laufsohlenmaterial eingebettet werden. Zur Bildung der Laufsohle kann jedes Gummi- oder Kunststoffmaterial verwendet werden, das in einem Spritzformungsvorgang aufgebracht werden kann und insbesondere unter Wärmeeinwirkung aushärtet.

**Patentansprüche**

1. Schuh mit einem Schaft (1), einer mit dem unteren Schaftrand (1') verbundenen Brandsohle (2) sowie einer mit dieser verbundenen Laufsohle (4), wobei sich an der Schaftaußenseite von der Laufsohle ein Streifen (3) nach oben erstreckt, der einen gesonderten umlaufenden Wulst bildet, welcher mit dem Laufsohlenprofil eine im wesentlichen spitzwinkelige Einkerbung begrenzt, dadurch gekennzeichnet, daß der Wulststreifen (3) mit Abstand vom unteren Schaftrand (1') an den Schaft (1) angesetzt und mit diesem verbunden ist, und daß der zumindest teilweise oberhalb der Brandsohle (2) gelegene Hohlraum zwischen Wulststreifen (3) und Schaft (1) von dem an die Brandsohle in an sich bekannter Weise in einem Spritzvorgang angeformtem Laufsohlenmaterial, vorzugsweise thermoplastischem Material, ausgefüllt ist, wobei der sich von der Spitze der Einkerbung schräg nach innen erstreckende freie Rand (3') des Wulststreifens (3), wie ebenfalls an sich bekannt, vom Laufsohlenmaterial umgeben ist.

2. Schuh nach Anspruch 1, dadurch gekennzeichnet, daß der Wulststreifen (3) aus Kunststoff besteht.

3. Spritzform zur Herstellung eines Schuhs nach Anspruch 1 oder 2 mit einem Schaft, einer mit dem unteren Schaftrand verbundenen Laufsohle aus thermoplastischem Material und einem sich an der Schaftaußenseite von der Laufsohle nach oben erstreckenden Streifen, der einen gesonderten umlaufenden Wulst bildet, mit einem Leisten, zwei gegeneinander bewegbaren Seitenteilen zum Ausformen der Laufsohlenseiten, wobei das Formungsprofil jedes Seitenteiles eine Dichtkante aufweist, und einem relativ zu den Seitenteilen bewegbaren, zum Ausformen der Laufsohlenunterseite dienenden Stempel, in dem Kanäle zum Einspritzen des Laufsohlenmaterials in den Formhohlraum ausgebildet sind, dadurch gekennzeichnet, daß das Formungsprofil jedes Seitenteiles (6) einen sich von der Dichtkante (10) schräg nach oben und außen über die Unterseite des Leistens (5) hinaus erstreckenden Formungsprofilabschnitt (11) als Anlagefläche für den Wulststreifen (3) beim Einspritzen des Laufsohlenmaterials aufweist, und daß der Leisten (5) bei geschlossener Form oberhalb der Seitenteildichtkante (10) angeordnet ist und von dieser auch einen seitlichen Abstand hat, der größer als die Stärke des auf den Leisten aufzubringenden Schuhschaftes (1) ist.

## Claims

1. Shoe comprising an upper (1), a welt (2) connected to the lower edges (1') of the upper and a sole (4) connected to the welt, a strip (3) extending on the outside of the upper upwards from the sole, which strip forms a seperate peripheral bead delimiting with the profile of the sole a substantially acute angular notch, characterized in that said bead strip (3) is attached and connected to said upper (1) in a distance from the lower edge (1') of the upper, and in that the hollow space between said bead strip (3) and said upper (1), which space is located at least partly above said welt (2), is filled with the sole material, preferably thermoplastic material, which is moulded to said welt in a manner known per se in an injection step, the free edge (3') of the bead strip (3) which extends from the tip of said notch obliquely towards qthe interior being surrounded by said sole material in a manner also known per se.

2. Shoe according to claim 1, characterized in that said bead strip (3) consists of plastics material.

3. Injection mould for making a shoe according to claim 1 or 2, which shoe comprises an upper, a sole of thermoplastic material connected to the lower edge of the upper, and a strip extending on the outside of the upper upwards from the sole, which strip forms a seperate peripheral bead, the mould comprising a last, two side parts for forming the sides of the sole, which parts are moveable towards each other, the mould profile of each side part having a sealing edge, and a stamp moveable relative to the side parts for moulding the bottom of the sole, in which stamp channels are provided for injecting the sole material into the mould cavity, characterized in that said mould profile of each side part (6) comprises a mould profile section (11) extending obliquely upwards and outwards from said sealing edge (10) beyond the bottom of said last (5) and providing an abutement surface for said bead strip (3) when injecting the sole material, and in that said last (5) in the closed mould is arranged above the sealing edge (10) of said side parts and is spaced from this edge laterally by a distance greater than the thickness of the shoe upper (1) to be fitted onto the last.

## Revendications

1. Chaussure comportant une tige (1), une première semelle (2) reliée au bord inférieur (1') de la tige ainsi qu'une semelle de marche (4) reliée à cette première semelle, étant entendu qu'au niveau de la face externe de la tige s'étend vers le haut, depuis la semelle de marche, une bande (3) formant un bourrelet de pourtour séparé qui, en association avec le profil de la semelle de marche, définit une rainure essentiellement à angle aigu, caractérisée en ce que la bande à bourrelet (3) est appliquée à la tige (1) à une certaine distance du bord inférieur (1') de celle-ci et est reliée à cette tige, et la cavité entre la bande à bourrelet (3) et la tige (1), située au moins en partie au-dessus de la première semelle (2), est remplie par la matière de la semelle de marche, de préférence une matière thermoplastique, moulée d'une manière connue sur la première semelle qu'au cours d'une opération d'injection, étant entendu que le bord libre (3') de la bande à bourrelet (3) qui s'étend obliquement vers l'intérieur depuis la pointe de la rainure est entouré, d'une manière bien connue, par la matière de la semelle de marche.

2. Chaussure suivant la revendication 1, caractérisée en ce que la bande à bourrelet (3) est en matière plastique.

3. Moule d'injection pour confectionner une chaussure suivant la revendication 1 ou 2, comportant une tige, une semelle de marche en matière thermoplastique reliée au bord inférieur de la tige et une bande qui s'étend vers le haut au niveau de la face externe de la tige depuis la semelle de marche et qui forme un bourrelet de pourtour séparé, une forme, deux parties latérales mobiles l'une vers l'autre pour mouler les côtés de la semelle de marche, étant entendu que le profil de moulage de chaque partie latérale présente un bord d'étanchéité, et un poinçon mobile par rapport aux parties latérales pour mouler la face inférieure de la semelle de marche, ce poinçon contenant des canaux destinés à injecter la matière de la semelle de marche dans la cavité de moulage, caractérisé en ce que le profil de façonnage de chaque partie latérale (6) présente un segment de profil de moulage (11) qui s'étend obliquement vers le haut et vers l'extérieur depuis le bord d'étanchéité (10) au-delà de la face inférieure de la forme (5) et qui sert de surface d'appui pour la bande à bourrelet (3) lors de l'injection de la matière de la semelle de marche, et la forme (5), lorsque le moule est fermé, est disposée au-dessus du bord d'étanchéité (10) des parties latérales et est aussi espacée de ce bord d'étanchéité d'une distance latérale qui est supérieure à l'épaisseur de la tige de chaussure (1) à appliquer sur la forme.